# EUROPEAN PATENT SPECIFICATION

(11) **EP 3 419 110 B1**
(45) Date of publication and mention of the grant of the patent: **24.11.2021**
(21) Application number: 16897517.5
(22) Date of filing: 05.04.2016
(51) Int. Cl.: H01Q 1/50, H01Q 1/24, H01Q 1/44, H01Q 9/42, H01Q 13/10, H01Q 5/328

(54) **TERMINAL ANTENNA AND TERMINAL**
ENDGERÄTANTENNE UND ENDGERÄT
ANTENNE DE TERMINAL ET TERMINAL

(43) Date of publication of application: 26.12.2018
(73) Proprietor: Huawei Technologies Co., Ltd., Longgang District Shenzhen, Guangdong 518129 (CN)
(72) Inventor: XUE, Liang, Shenzhen Guangdong 518129 (CN); YU, Dong, Shenzhen Guangdong 518129 (CN); WANG, Hanyang, Shenzhen Guangdong 518129 (CN); YOU, Jiaqing, Shenzhen Guangdong 518129 (CN); WANG, Lei, Shenzhen Guangdong 518129 (CN); ZHAO, Fangchao, Shenzhen Guangdong 518129 (CN); ZHAO, Lei, Shenzhen Guangdong 518129 (CN); YING, Lijun, Shenzhen Guangdong 518129 (CN); ZHANG, Rui, Shenzhen Guangdong 518129 (CN)
(74) Representative: Goddar, Heinz J.
(86) International application number: PCT/CN2016/078499
(87) International publication number: WO 2017/173582

(56) References cited:
- EP-A1- 3 229 314
- CN-A- 104 466 392
- CN-A- 104 505 589
- CN-A- 105 244 598
- US-A1- 2012 299 785
- US-A1- 2014 340 280
- US-A1- 2015 057 054

## Description

### TECHNICAL FIELD

The present invention relates to the field of communications technologies, and in particular, to a terminal antenna and a terminal.

### BACKGROUND

With rapid development of wireless communications technologies, a terminal has been playing an increasingly important role in people's daily work and life. A terminal antenna is a device, configured to receive or send a signal, in a terminal. In recent years, to increase terminal rigidness and for an aesthetical purpose, many terminal product manufacturers wish to add a metal housing to a terminal. However, after a metal housing is added, a signal inside a terminal cannot be effectively radiated by a terminal antenna, and the terminal antenna cannot effectively receive a signal sent by a base station either. Consequently, a metal housing cannot be added to a terminal.

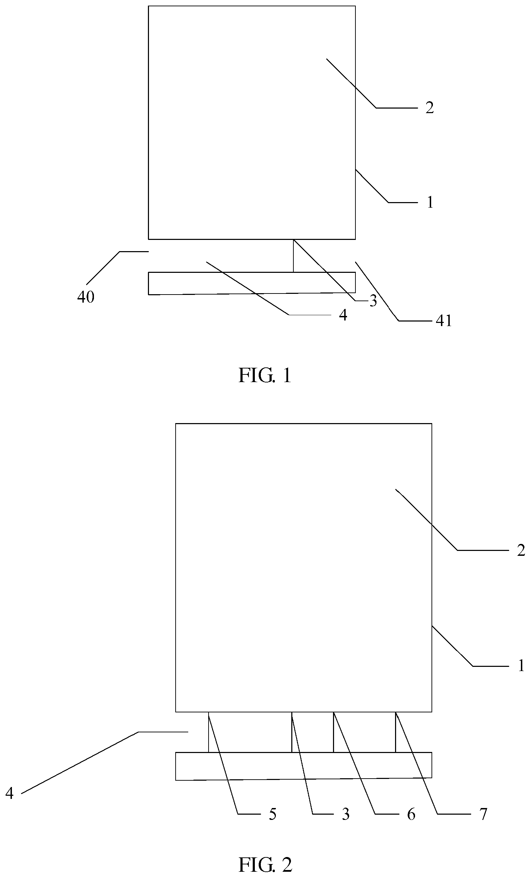

In the prior art, to resolve the foregoing problem, in a terminal provided with a metal housing, generally, a slot is disposed in the metal housing of the terminal, and the metal housing provided with the slot is used as a part of a terminal antenna. FIG. 1 is a schematic structural diagram of a terminal antenna in the prior art. As shown in FIG. 1, the terminal antenna includes a metal housing 1, a mainboard 2, and a feedpoint 3. A slot 4 is disposed at the bottom of the metal housing 1, and the metal housing 1 is electrically connected to the feedpoint 3. In this case, when a changing current is applied to the feedpoint, low-frequency resonance for radiating a low-frequency signal is formed from the feedpoint 3 to a first end 40 of the slot, and high-frequency resonance for radiating a high-frequency signal is formed from the feedpoint 3 to a second end 41 of the slot.

However, in the prior art, when the slot in the metal housing of the terminal is covered by a hand, a low-frequency signal or a high-frequency signal radiated by the terminal antenna is rapidly attenuated, thereby reducing efficiency of the terminal antenna.

US 2012/299785 A1 discloses electronic devices containing wireless communications circuitry. The wireless communications circuitry includes radio-frequency transceiver circuitry coupled to an adjustable antenna. The adjustable antenna contains conductive antenna structure such as conductive electronic device housing structures. Electrical components such as switches and resonant circuits can be used in configuring the antenna to operate in two or more different antenna modes at different respective communications bands. Control circuitry is used in controlling the switches. The antenna is configured to operate as an inverted-F antenna in one mode of operation and a slot antenna in a second mode of operation.

Post-published document EP 3 229 314 A1 represents a prior art under Article 54(3) EPC and discloses a terminal antenna where switches bridging slits of the housing help to overcome the issue of "a death grip".

### SUMMARY

The present invention provides a terminal antenna of claim 1 and a terminal of claim 7, so as to resolve a prior-art problem of low efficiency of a terminal antenna caused because a low-frequency signal or a high-frequency signal radiated by the terminal antenna is rapidly attenuated when a slot in a metal housing of a terminal is covered by a hand. Possible implementation manners are disclosed in the dependent claims.

According to a first aspect, a terminal antenna is provided, where the terminal antenna includes a mainboard, a feedpoint disposed on the mainboard, a metal housing, an adjustable apparatus, and at least two adjustable ground points, where the mainboard is located on an inner side of the metal housing, the metal housing is electrically connected to a ground point on the mainboard, and a slot is disposed in the metal housing; and the feedpoint and the at least two adjustable ground points each are disposed on a part of the mainboard facing the slot. In addition, the at least two adjustable ground points each are electrically connected to the mainboard by using the adjustable apparatus. In this case, the adjustable apparatus can be configured to control whether each adjustable ground point is grounded, so that signals with a same frequency can be radiated from a first end and a second end of the slot of the terminal antenna. This avoids a prior-art problem of low efficiency of a terminal antenna caused because a low-frequency signal or a high-frequency signal radiated by the terminal antenna is rapidly attenuated when a slot in a metal housing of a terminal is covered by a hand.

The feedpoint may be a metal sheet on the mainboard.

Further, based on the foregoing embodiment, the metal housing is electrically connected to the mainboard by using a capacitor.

It should be noted that the capacitor may be a capacitor component, or may be an equivalent capacitor formed between the metal housing and the mainboard.

Further, based on any one of the foregoing embodiments, the feedpoint is electrically connected to a matching circuit on the mainboard, and the matching circuit herein is configured to process a transmit signal generated by a transmitter of a terminal on which the terminal antenna is located, and provide the processed transmit signal to the feedpoint. In this case, the feedpoint receives the transmit signal with maximum power.

Optionally, when the at least two adjustable ground points are three adjustable ground points. A first adjustable ground point is located at one end of the slot, and a second adjustable ground point and a third adjustable ground point are located at the other end of the slot; and the second adjustable ground point is located between the first adjustable ground point and the third adjustable ground point.

Further, based on any one of the foregoing embodiments, the first adjustable ground point is electrically connected to a ground point on the mainboard by using a first switch circuit; the second adjustable ground point is electrically connected to a ground point on the mainboard by using a second switch circuit; and the third adjustable ground point is electrically connected to a ground point on the mainboard by using a third switch circuit. The adjustable apparatus includes the first switch circuit, the second switch circuit and the third switch circuit. In this case, efficiency of controlling the first adjustable ground point, the second adjustable ground point, and the third adjustable ground point can be improved.

Optionally, the first switch circuit, the second switch circuit, and the third switch circuit each are an adjustable capacitor circuit, an adjustable inductor circuit, or a filter circuit.

It should be noted that the first switch circuit, the second switch circuit, and the third switch circuit may be any combination of the adjustable capacitor circuit, the adjustable inductor circuit, or the filter circuit.

Further, based on any of the foregoing embodiments, the feedpoint is located between the first adjustable ground point and the second adjustable ground point; or the feedpoint is located between the second adjustable ground point and the third adjustable ground point.

Optionally, that a slot is disposed in the metal housing is specifically:
two slots are disposed on two sides of the metal housing, respectively; or
a U-shape slot is disposed in the metal housing, and two ends of the U-shape slot extend to two sides of the metal housing; or
two slots are disposed at the bottom of the metal housing; or
a linear slot is disposed in the metal housing, and two ends of the linear slot extend to two sides of the metal housing.

It should be noted that a manner in which the slot in the metal housing of the terminal is disposed is not limited to the foregoing four manners.

Optionally, the adjustable apparatus is a switch, a variable capacitor, or a variable inductor. In this case, efficiency of controlling the adjustable ground points by the adjustable apparatus is improved.

According to a second aspect, a terminal is provided, the terminal includes the terminal antenna provided in the first aspect.

In the terminal antenna and the terminal that are provided in the embodiments of the present invention, the terminal antenna includes the mainboard, the feedpoint disposed on the mainboard, the metal housing, the adjustable apparatus, and the at least two adjustable ground points. The mainboard is located on an inner side of the metal housing, the metal housing is electrically connected to the mainboard, the slot is disposed in the metal housing, and the feedpoint and the at least two adjustable ground points each are disposed on a part of the mainboard facing the slot. In addition, the at least two adjustable ground points each are electrically connected to the mainboard by using the adjustable apparatus. In this case, the adjustable apparatus can be configured to control whether each adjustable ground point is grounded, so that signals with a same frequency can be radiated from a first end and a second end of the slot of the terminal antenna. This avoids a prior-art problem of low efficiency of a terminal antenna caused because a low-frequency signal or a high-frequency signal radiated by the terminal antenna is rapidly attenuated when a slot in a metal housing of a terminal is covered by a hand.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic structural diagram of a terminal antenna in the prior art;
FIG. 2 is a schematic structural diagram of Embodiment 1 of a terminal antenna according to the embodiments of the present invention;
FIG. 3 is a schematic structural diagram of an embodiment of a manner in which a slot is disposed in Embodiment 1 of a terminal antenna according to the embodiments of the present invention;
FIG. 4 is a schematic structural diagram of another embodiment of a manner in which a slot is disposed in Embodiment 1 of a terminal antenna according to the embodiments of the present invention;
FIG. 5 is a schematic structural diagram of still another embodiment of a manner in which a slot is disposed in Embodiment 1 of a terminal antenna according to the embodiments of the present invention;
FIG. 6a is a schematic diagram of current distribution of first resonance when a terminal antenna provided in Embodiment 2 of the present invention is in a low-frequency state;
FIG. 6b is a schematic diagram of current distribution of second resonance when a terminal antenna provided in Embodiment 2 of the present invention is in a low-frequency state;
FIG. 6c is a schematic diagram of current distribution of third resonance when a terminal antenna provided in Embodiment 2 of the present invention is in a low-frequency state;
FIG. 6d is a schematic diagram of current distribution of fourth resonance when a terminal antenna provided in Embodiment 2 of the present invention is in a low-frequency state;
FIG. 7a is a schematic diagram of current distribution of fifth resonance when a terminal antenna provided in Embodiment 2 of the present invention is in an intermediate-frequency state;
FIG. 7b is a schematic diagram of current distribution of sixth resonance when a terminal antenna provided in Embodiment 2 of the present invention is in an intermediate-frequency state;
FIG. 7c is a schematic diagram of current distribution of seventh resonance when a terminal antenna provided in Embodiment 2 of the present invention is in an intermediate-frequency state;
FIG. 7d is a schematic diagram of current distribution of eighth resonance when a terminal antenna provided in Embodiment 2 of the present invention is in an intermediate-frequency state;
FIG. 8a is a schematic diagram of current distribution of ninth resonance when a terminal antenna provided in Embodiment 2 of the present invention is in a high-frequency state;
FIG. 8b is a schematic diagram of current distribution of tenth resonance when a terminal antenna provided in Embodiment 2 of the present invention is in a high-frequency state; and
FIG. 8c is a schematic diagram of current distribution of eleventh resonance when a terminal antenna provided in Embodiment 2 of the present invention is in a high-frequency state.

### Reference numerals:

1: Metal housing;
2: Mainboard;
3: Feedpoint;
4: Slot;
5: First adjustable ground point;
6: Second adjustable ground point;
7: Third adjustable ground point;
40: First end of the slot;
41: Second end of the slot;
101: First resonance;
102: Second resonance;
103: Third resonance;
104: Fourth resonance;
201: Fifth resonance;
202: Sixth resonance;
203: Seventh resonance;
204: Eighth resonance;
301: Ninth resonance;
302: Tenth resonance;
303: Eleventh resonance.

### DESCRIPTION OF EMBODIMENTS

Terminal manufacturers at home and abroad are focusing on metal and ultrathin terminals, but implementation of the metal and ultrathin terminals brings a great technical challenge to a design of a terminal antenna.

A terminal antenna provided in embodiments of the present invention can be applicable to a terminal with a metal housing.

A terminal with a metal housing in the embodiments of the present invention may be a wireless terminal, and the wireless terminal may be a device providing voice and/or data connectivity to a user, a handheld device with a wireless connection function, or another processing device connected to a wireless modem. The wireless terminal may communicate with one or more core networks by using a wireless access network (for example, RAN, Wireless Access Network). The wireless terminal may be a mobile terminal, such as a mobile telephone (or referred to as a "cellular" phone) or a computer with a mobile terminal, such as a portable, pocket-sized, hand-held, computer built-in, or in-vehicle mobile apparatus, which exchanges voice and/or data with the wireless access network. For example, the wireless terminal may be a device such as a personal communication service (PCS, Personal Communication Service) telephone, a cordless telephone set, a Session Initiation Protocol (SIP) telephone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile station (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

The terminal antenna in the embodiments of the present invention is intended to resolve a prior-art problem of low efficiency of a terminal antenna caused because a low-frequency signal or a high-frequency signal radiated by the terminal antenna is rapidly attenuated when a slot in a metal housing of a terminal is covered by a hand.

The following uses specific embodiments to describe in details a technical solution of the present invention and how the foregoing technical problem is resolved by using the technical solution of the present invention. The several following specific embodiments may be combined with each other, and details about a same or similar concept or a process may not be repeated in some embodiments.

FIG. 2 is a schematic structural diagram of Embodiment 1 of a terminal antenna according to the embodiments of the present invention. As shown in FIG. 2, the terminal antenna includes a mainboard 2, a feedpoint 3 disposed on the mainboard 2, a metal housing 1, an adjustable apparatus (not shown in the figure), and at least two adjustable ground points.

The mainboard 2 is located on an inner side of the metal housing 1, the metal housing 1 is electrically connected to the mainboard 2, and a slot 4 is disposed in the metal housing 1.

In this embodiment, specifically, the metal housing 1 may be electrically connected to the mainboard by using a capacitor, and the capacitor may be a capacitor component, or may be an equivalent capacitor formed between the metal housing 1 and the mainboard 2.

In addition, slot disposing in the metal housing 1 is implemented in the following four specific manners, but no limitation is set thereto.

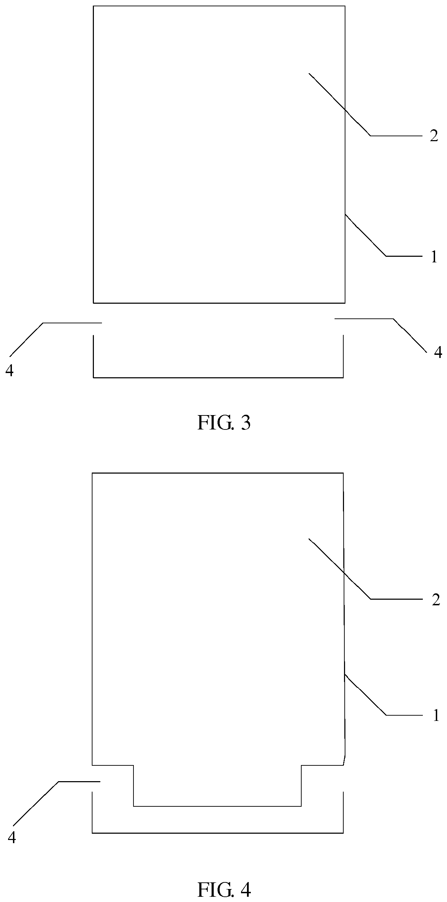

FIG. 3 is a schematic structural diagram of an embodiment of a manner in which a slot is disposed in Embodiment 1 of a terminal antenna according to the embodiments of the present invention. As shown in FIG. 3, two slots 4 are disposed on two sides of the metal housing 1, respectively.

FIG. 4 is a schematic structural diagram of another embodiment of a manner in which a slot is disposed in Embodiment 1 of a terminal antenna according to the embodiments of the present invention. As shown in FIG. 4, a U-shape slot 4 is disposed in the metal housing 1, and two ends of the U-shape slot 4 extend to two sides of the metal housing 1.

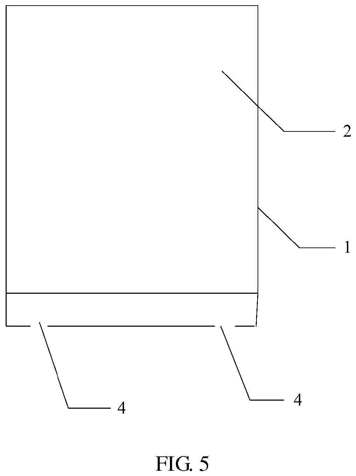

FIG. 5 is a schematic structural diagram of still another embodiment of a manner in which a slot is disposed in Embodiment 1 of a terminal antenna according to the embodiments of the present invention. As shown in FIG. 5, two slots 4 are disposed at the bottom of the metal housing 1.

Still referring to FIG. 2, as shown in FIG. 2, a linear slot 4 is disposed in the metal housing, and two ends of the linear slot 4 extend to two sides of the metal housing 1.

It should be noted that the embodiments of the present invention merely provide several manners in which the slot is disposed in the metal housing of a terminal, but no limitation is set thereto.

In addition, the feedpoint 3 and the at least two adjustable ground points each are disposed on a part of the mainboard 2 facing the slot 4. The at least two adjustable ground points each are electrically connected to the mainboard 2 by using an adjustable apparatus, and the adjustable apparatus is configured to control whether each adjustable ground point is grounded.

In this embodiment, specifically, the feedpoint 3 is electrically connected to a feeding circuit (not shown in the figure) on the mainboard 2, and an adjustable ground point is electrically connected to a ground point on the mainboard 2 by using the adjustable apparatus. The feeding circuit herein is configured to process a transmit signal generated by a transmitter of a terminal on which the terminal antenna is located, and provide the processed transmit signal to the feedpoint 3. The feeding circuit may be a matching circuit. In this case, the feedpoint 3 receives the transmit signal with maximum power.

In addition, the adjustable apparatus may be a switch, a variable capacitor, or a variable inductor.

It should be noted that the adjustable apparatus may be a mechanical switch, or a component that is formed by a variable capacitor/variable inductor and that has a switch function, but no limitation is set thereto.

In this embodiment, for example, if the adjustable apparatus is a switch, when the switch is turned off, the adjustable ground point connected to the adjustable apparatus is grounded; if the adjustable apparatus is a variable capacitor, when a capacitance value of the variable capacitor is greater than a preset threshold, the adjustable ground point connected to the adjustable apparatus is grounded; or if the adjustable apparatus is a variable inductor, when an inductance value of the variable inductor is less than a preset threshold, the adjustable ground point connected to the adjustable apparatus is grounded.

In this embodiment, the terminal antenna includes the mainboard, the feedpoint disposed on the mainboard, the metal housing, the adjustable apparatus, and the at least two adjustable ground points. The mainboard is located on an inner side of the metal housing, the metal housing is electrically connected to the mainboard, the slot is disposed in the metal housing, and the feedpoint and the at least two adjustable ground points each are disposed on a part of the mainboard facing the slot. In addition, the at least two adjustable ground points each are electrically connected to the mainboard by using the adjustable apparatus. In this case, the adjustable apparatus can be configured to control whether each adjustable ground point is grounded, so that signals with a same frequency can be radiated from a first end and a second end of the slot of the terminal antenna. This avoids a prior-art problem of low efficiency of a terminal antenna caused because a low-frequency signal or a high-frequency signal radiated by the terminal antenna is rapidly attenuated when a slot in a metal housing of a terminal is covered by a hand.

Still referring to FIG. 2, based on the foregoing embodiment, in Embodiment 2 of a terminal antenna provided in the present invention, when the at least two adjustable ground points are three adjustable ground points, a first adjustable ground point 5 is located at one end of the slot, and a second adjustable ground point 6 and a third adjustable ground point 7 are located at the other end of the slot.

The second adjustable ground point 6 is located between the first adjustable ground point 5 and the third adjustable ground point 7.

In this embodiment, whether the first adjustable ground point, the second adjustable ground point, and the third adjustable ground point are grounded can be controlled, so that signals with a same frequency can be radiated from a first end and a second end of the slot of the terminal antenna.

But no limitation is set to the foregoing embodiment, a quantity of adjustable ground points and a position of an adjustable ground point can be flexibly adjusted according to a specific situation of the terminal, and a main purpose is to make signals with a same frequency radiated from the first end of the slot and the second end of the slot of the terminal antenna.

In addition, in a possible implementation implemented in the present invention, the first adjustable ground point 5 is electrically connected to a ground point on the mainboard by using a first switch circuit (not shown in the figure).

The second adjustable ground point 6 is electrically connected to a ground point on the mainboard 2 by using a second switch circuit (not shown in the figure).

The third adjustable ground point 7 is electrically connected to a ground point on the mainboard 2 by using a third switch circuit (not shown in the figure).

The feedpoint 3 is located between the first adjustable ground point 5 and the second adjustable ground point 6, or the feedpoint 3 is located between the second adjustable ground point 6 and the third adjustable ground point 7.

Specifically, the first switch circuit, the second switch circuit, and the third switch circuit each are an adjustable capacitor circuit, an adjustable inductor circuit, or a filter circuit.

It should be noted that the filter circuit may be formed by serially connecting an inductor and a capacitor. According to a filter circuit principle, it can be learned that a low-pass filter, a band-pass filter, and a high-pass filter may be formed by setting different inductance values and capacitance values. For example, when the terminal antenna operates in a low-frequency state, a first switch needs to control the first ground point to be disconnected. In this case, the first switch can be implemented by using the high-pass filter.

In this embodiment, the first adjustable ground point is electrically connected to a ground point on the mainboard by using the first switch circuit; the second adjustable ground point is electrically connected to a ground point on the mainboard by using the second switch circuit; and third adjustable ground point is electrically connected to a ground point on the mainboard by using the third switch circuit. The first switch circuit, the second switch circuit, and the third switch circuit each are an adjustable capacitor circuit, an adjustable inductor circuit, or a filter circuit. In this case, efficiency of controlling the first adjustable ground point, the second adjustable ground point, and the third adjustable ground point can be improved.

During specific usage, whether the first adjustable ground point 5, the second adjustable ground point 6, and the third adjustable ground point 7 are grounded are respectively controlled by adjusting statuses of the first switch circuit, the second switch circuit, and the third switch circuit, so that the terminal antenna operates in different statuses, and there are three different operating statuses for the terminal antenna: a low-frequency state, an intermediate-frequency state, and a high-frequency state.

When the terminal antenna needs to use a low frequency to transmit data, the terminal antenna needs to operate in the low-frequency state. In this case, the terminal antenna adjusts the statuses of the first switch circuit, the second switch circuit, and the third switch circuit to respectively control the first adjustable ground point 5 to be disconnected, the second adjustable ground point 6 to be grounded, and the third adjustable ground point 7 to be disconnected.

The following describes, according to a current distribution diagram when the terminal antenna is in the low-frequency state, an operating principle of the terminal antenna in the low-frequency state in details.

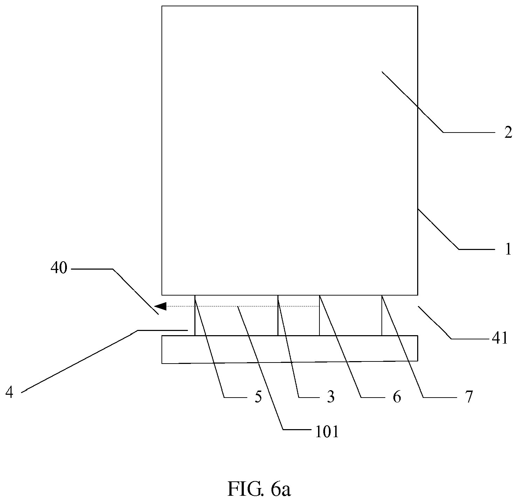

FIG. 6a is a schematic diagram of current distribution of first resonance when a terminal antenna provided in Embodiment 2 of the present invention is in a low-frequency state. As shown in FIG. 6a, when the first adjustable ground point 5 is disconnected, the second adjustable ground point 6 is grounded, and the third adjustable ground point 7 is disconnected, that is, the terminal antenna is in the low-frequency state, first resonance 100 with approximately a quarter of a wavelength and with a center frequency of 0.915 GHz is formed from the second adjustable ground point 6 to a first end 40 of the slot, and the first resonance 101 is low-frequency resonance.

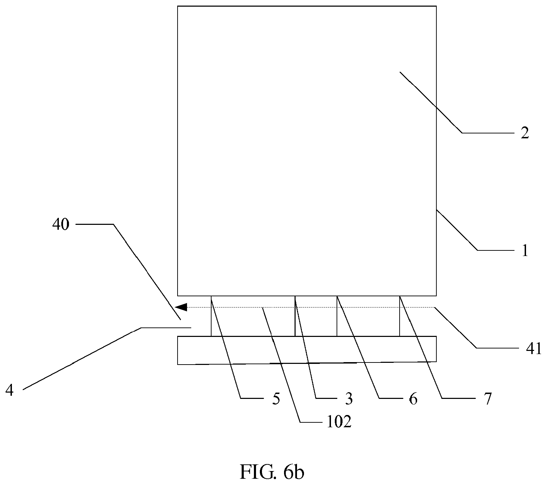

FIG. 6b is a schematic diagram of current distribution of second resonance when a terminal antenna provided in Embodiment 2 of the present invention is in a low-frequency state. As shown in FIG. 6b, when the first adjustable ground point 5 is disconnected, the second adjustable ground point 6 is grounded, and the third adjustable ground point 7 is disconnected, that is, the terminal antenna is in the low-frequency state, second resonance 102 with approximately a half of a wavelength and with a center frequency of 1.68 GHz is formed from a second end 41 of the slot to the first end 40 of the slot, and the second resonance 102 is high-frequency resonance.

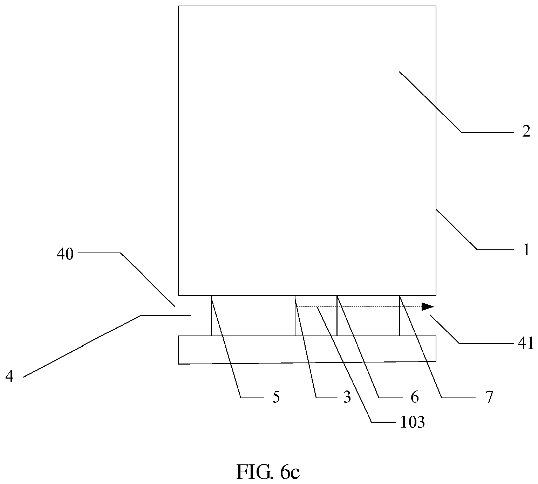

FIG. 6c is a schematic diagram of current distribution of third resonance when a terminal antenna provided in Embodiment 2 of the present invention is in a low-frequency state. As shown in FIG. 6c, when the first adjustable ground point 5 is disconnected, the second adjustable ground point 6 is grounded, and the third adjustable ground point 7 is disconnected, that is, the terminal antenna is in the low-frequency state, third resonance 103 with approximately a quarter of a wavelength and with a center frequency of 2 GHz is formed from the feedpoint 3 to the second end 41 of the slot, and the third resonance 103 is high-frequency resonance.

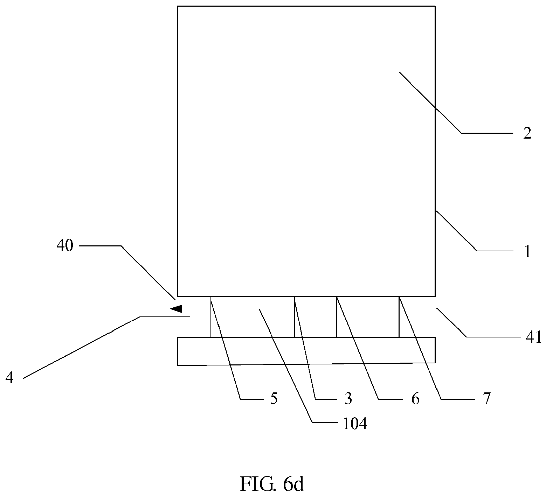

FIG. 6d is a schematic diagram of current distribution of fourth resonance when a terminal antenna provided in Embodiment 2 of the present invention is in a low-frequency state. As shown in FIG. 6d, when the first adjustable ground point 5 is disconnected, the second adjustable ground point 6 is grounded, and the third adjustable ground point 7 is disconnected, that is, the terminal antenna is in the low-frequency state, fourth resonance 104 with approximately three quarters of a wavelength and with a center frequency of 2.9 GHz is formed from the feedpoint 3 to the first end 40 of the slot, and the fourth resonance is high-frequency resonance 104.

It should be noted that when the terminal antenna is in the low-frequency state, energy of the first resonance 101 is the highest, and energy of the second resonance 102, the third resonance 103, and the fourth resonance 104 is relatively low. Therefore, the terminal antenna in the low-frequency state operates in the first resonance 101. Because the low-frequency resonance is generated only at the first end 40 of the slot, when the terminal antenna is used by a left hand or a right hand, efficiency of the antenna is still rapidly reduced.

A simulation result of this embodiment of the present invention proves that efficiency of the terminal antenna when the terminal antenna is in a free space state is higher than efficiency of the antenna when the terminal antenna is used by a left hand or a right hand. When the terminal antenna is used by a right hand and the antenna operates on a low frequency band, efficiency of the antenna is the lowest and a reflection coefficient of the antenna is the largest.

When the terminal antenna needs to use an intermediate frequency to transmit data, the terminal antenna needs to operate in an intermediate-frequency state. In this case, the terminal antenna adjusts the statuses of the first switch circuit, the second switch circuit, and the third switch circuit to respectively control the first adjustable ground point 5 to be grounded, the second adjustable ground point 6 to be grounded, and the third adjustable ground point 7 to be disconnected.

The following describes, according to a current distribution diagram when the terminal antenna is in the intermediate-frequency state, an operating principle of the terminal antenna in the intermediate-frequency state in details.

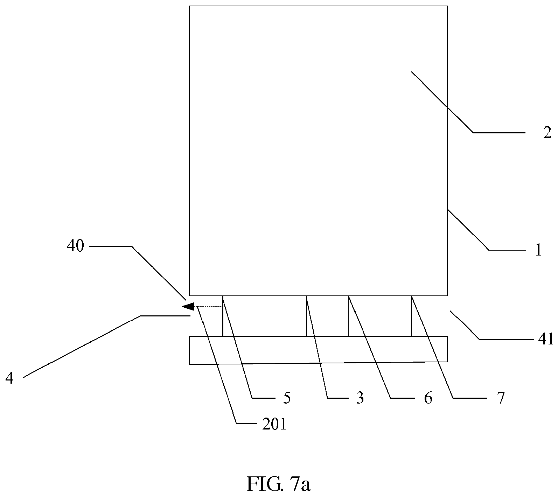

FIG. 7a is a schematic diagram of current distribution of fifth resonance when a terminal antenna provided in Embodiment 2 of the present invention is in an intermediate-frequency state. As shown in FIG. 7a, when the first adjustable ground point 5 is grounded, the second adjustable ground point 6 is grounded, and the third adjustable ground point 7 is disconnected, that is, the terminal antenna is in the intermediate-frequency state, fifth resonance 201 with approximately a quarter of a wavelength and with a center frequency of 1.48 GHz is formed from the first adjustable ground point 5 to the first end 40 of the slot, and the fifth resonance 201 is intermediate-frequency resonance.

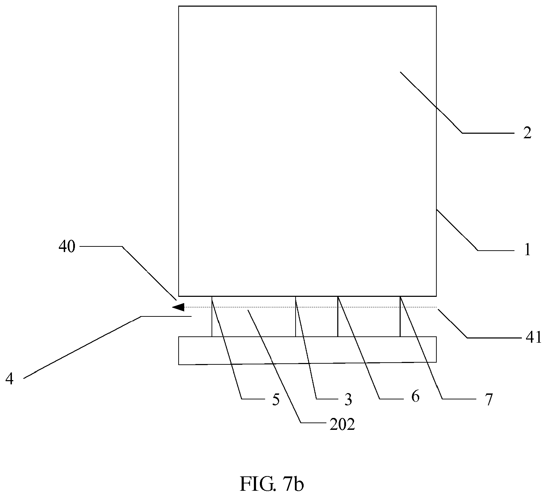

FIG. 7b is a schematic diagram of current distribution of sixth resonance when a terminal antenna provided in Embodiment 2 of the present invention is in an intermediate-frequency state. As shown in FIG. 7b, when the first adjustable ground point 5 is grounded, the second adjustable ground point 6 is grounded, and the third adjustable ground point 7 is disconnected, that is, the terminal antenna is in the intermediate-frequency state, sixth resonance 202 with approximately a half of a wavelength and with a center frequency of 1.76 GHz is formed from the second end 41 of the slot to the first end 40 of the slot, and the sixth resonance 202 is intermediate-frequency resonance.

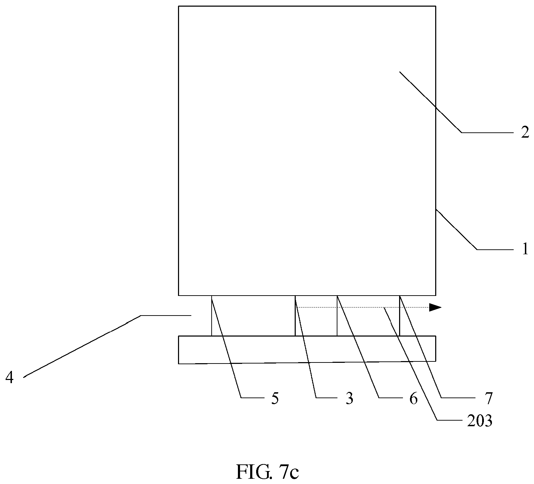

FIG. 7c is a schematic diagram of current distribution of seventh resonance when a terminal antenna provided in Embodiment 2 of the present invention is in an intermediate-frequency state. As shown in FIG. 7c, when the first adjustable ground point 5 is grounded, the second adjustable ground point 6 is grounded, and the third adjustable ground point 7 is disconnected, that is, the terminal antenna is in the intermediate-frequency state, seventh resonance 203 with approximately a quarter of a wavelength and with a center frequency of 2.08 GHz is formed from the feedpoint 3 to the second end 41 of the slot, and the seventh resonance 203 is intermediate-frequency resonance.

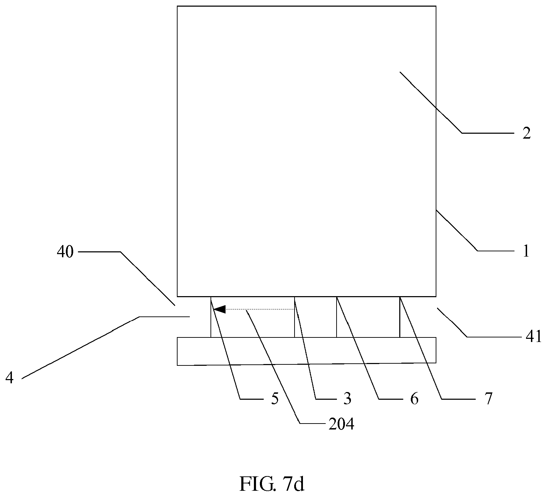

FIG. 7d is a schematic diagram of current distribution of eighth resonance when a terminal antenna provided in Embodiment 2 of the present invention is in an intermediate-frequency state. As shown in FIG. 7d, when the first adjustable ground point 5 is grounded, the second adjustable ground point 6 is grounded, and the third adjustable ground point 7 is disconnected, that is, the terminal antenna is in the intermediate-frequency state, eighth resonance 204 with approximately a half of a wavelength and with a center frequency of 3.32 GHz is formed from the feedpoint 3 to the first adjustable ground point 5, and the eighth resonance is high-frequency resonance 204.

It should be noted that, when the terminal antenna is in the intermediate-frequency state, the fifth resonance 201 and the seventh resonance 203 generate resonance of a frequency band from 1710 MHz to 2170 MHz by means of excitation, the fifth resonance 201 is formed at the first adjustable ground point 5 and the first end 40 of the slot, and the seventh resonance 203 is formed from the feedpoint 3 to the second end 41 of the slot. Therefore, when the terminal antenna is used by a left hand or a right hand, efficiency of operating on an intermediate frequency band by the terminal antenna is not rapidly reduced, and the terminal antenna still operates normally.

A simulation result of this embodiment of the present invention proves that efficiency of the terminal antenna when the terminal antenna is in a free space state is higher than efficiency of the antenna when the terminal antenna is used by a left hand or a right hand. When the terminal antenna is used by a right hand or a left hand and the antenna operates on the intermediate frequency band, efficiency of the antenna is close to a reflection coefficient.

When the terminal antenna needs to use a high frequency to transmit data, the terminal antenna needs to operate in an intermediate-frequency state. In this case, the terminal antenna adjusts the statuses of the first switch circuit, the second switch circuit, and the third switch circuit to respectively control the first adjustable ground point 5 to be disconnected, the second adjustable ground point 6 to be grounded, and the third adjustable ground point 7 to be grounded.

The following describes, according to a current distribution diagram when the terminal antenna is in a high-frequency state, an operating principle of the terminal antenna in the high-frequency state in details.

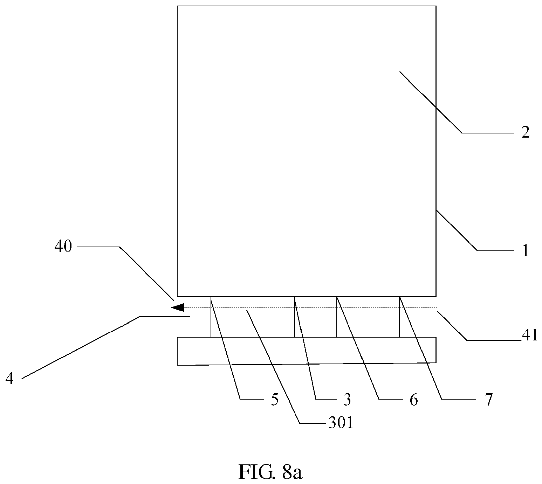

FIG. 8a is a schematic diagram of current distribution of ninth resonance when a terminal antenna provided in Embodiment 2 of the present invention is in a high-frequency state. As shown in FIG. 8a, when the first adjustable ground point 5 is disconnected, the second adjustable ground point 6 is grounded, and the third adjustable ground point 7 is grounded, that is, the terminal antenna is in the high-frequency state, ninth resonance 301 with approximately a half of a wavelength and with a center frequency of 1.6933 GHz is formed from the second end 41 of the slot to the first end 40 of the slot, and the ninth resonance 301 is intermediate-frequency resonance.

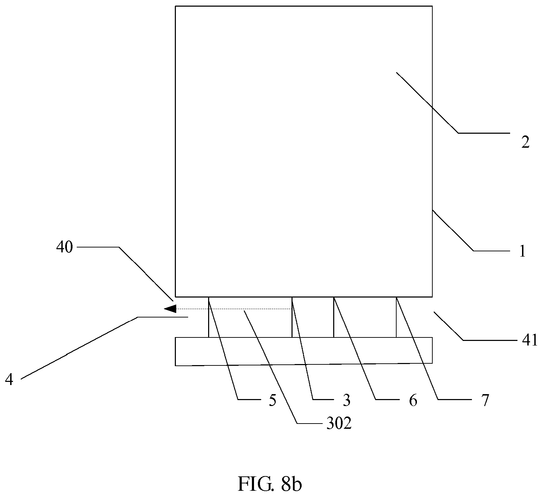

FIG. 8b is a schematic diagram of current distribution of tenth resonance when a terminal antenna provided in Embodiment 2 of the present invention is in a high-frequency state. As shown in FIG. 8b, when the first adjustable ground point 5 is disconnected, the second adjustable ground point 6 is grounded, and the third adjustable ground point 7 is grounded, that is, the terminal antenna is in the high-frequency state, tenth resonance 302 with approximately a quarter of a wavelength and with a center frequency of 2.5186 GHz is formed from the feedpoint 3 to the first end 40 of the slot, and the tenth resonance 302 is high-frequency resonance.

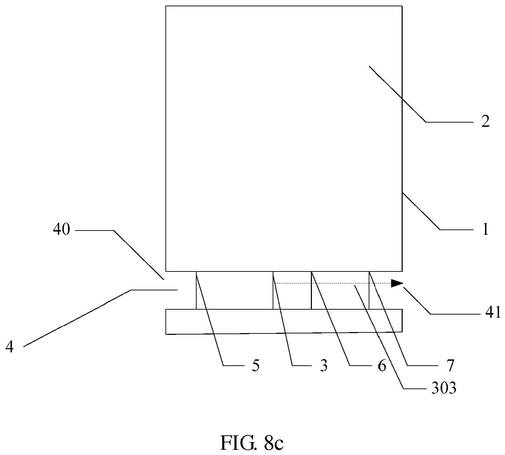

FIG. 8c is a schematic diagram of current distribution of eleventh resonance when a terminal antenna provided in Embodiment 2 of the present invention is in a high-frequency state. As shown in FIG. 8c, when the first adjustable ground point 5 is disconnected, the second adjustable ground point 6 is grounded, and the third adjustable ground point 7 is grounded, that is, the terminal antenna is in the high-frequency state, eleventh resonance 303 with a quarter of a wavelength and with a center frequency of 2.6301 GHz is formed from the feedpoint 3 to the second end 41 of the slot, and the eleventh resonance 303 is high-frequency resonance.

It should be noted that when the terminal antenna is in the high-frequency state, the tenth resonance 302 and the eleventh resonance 303 generate resonance with a frequency band from 2.5 GHz to 2.7 GHz by means of excitation, the tenth resonance 302 is formed at the feedpoint 3 and the first end 40 of the slot, and the eleventh resonance 303 is formed at the feedpoint 3 and the second end 41 of the slot. Therefore, when the terminal antenna is used by a left hand or a right hand, efficiency of the terminal antenna on a high frequency band is not rapidly reduced, and the terminal antenna can still operate normally.

A simulation result of this embodiment of the present invention proves that efficiency of the terminal antenna when the terminal antenna is in a free space state is higher than efficiency of the antenna when the terminal antenna is used by a left hand or a right hand. When the terminal antenna is used by a right hand or a left hand, efficiency of the antenna is close to a reflection coefficient.

An embodiment of the present invention further provides a terminal, including the terminal antenna provided in any one of the embodiments of the present invention.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments. Therefore, the protection scope of the present invention shall be subject to the protection scope of the claims.

## Claims

1. A terminal antenna, comprising a mainboard (2), a feedpoint (3) disposed on the mainboard (2), a metal housing (1), an adjustable apparatus, and at least two adjustable ground points comprising a first adjustable ground point (5) and a second adjustable ground point (6), wherein
the mainboard (2) is located on an inner side of the metal housing (1), the metal housing (1) is electrically connected to the mainboard (2), and a slot (4) is disposed in the metal housing (1);
the feedpoint (3) and the at least two adjustable ground points each are disposed on a part of the mainboard (2) facing the slot (4), wherein the feedpoint (3) is located between the first adjustable ground point (5) and the second adjustable ground point (6); and
the first adjustable ground point (5), and the second adjustable ground point (6) each are electrically connected to a ground of the mainboard (2) by using the adjustable apparatus, and
wherein the feedpoint (3) is electrically connected to a feeding circuit on the mainboard (2), the feeding circuit is configured to process a transmit signal generated by a transmitter of a terminal on which the terminal antenna is located, and provide the processed transmit signal to the feedpoint (3); and
the adjustable apparatus is configured to control whether each adjustable ground point is grounded so that signals with a same frequency can be radiated from a first end (40) of the slot (4) and a second end (41) of the slot (4).

2. The terminal antenna according to claim 1, wherein the at least two adjustable ground points further comprise a third adjustable ground point (7), the third adjustable ground point is electrically connected to the ground of the mainboard (2) by using the adjustable apparatus, wherein the first adjustable ground point (5) is located at the first end (40) of the slot (4), and the second adjustable ground point (6) and a third adjustable ground point are located at the second end (41) of the slot (4); and
the second adjustable ground point (6) is located between the first adjustable ground point (5) and the third adjustable ground point (7).

3. The terminal antenna according to claim 2, wherein the first adjustable ground point (5) is electrically connected to the ground of the mainboard (2) by using a first switch circuit;
the second adjustable ground point (6) is electrically connected to the ground of the mainboard (2) by using a second switch circuit; and
the third adjustable ground point (7) is electrically connected to the ground of the mainboard (2) by using a third switch circuit;
wherein the adjustable apparatus includes the first switch circuit, the second switch circuit and the third switch circuit.

4. The terminal antenna according to claim 3, wherein the first switch circuit, the second switch circuit, and the third switch circuit each are an adjustable capacitor circuit, an adjustable inductor circuit, or a filter circuit.

5. The terminal antenna according to claim 2, wherein the slot (4) is a U-shape slot disposed in the metal housing (1), and two ends of the U-shape slot extend to two sides of the metal housing (1); or wherein the slot (4) is a linear slot disposed in the metal housing (1), and two ends of the linear slot extend to two sides of the metal housing (1).

6. The terminal antenna according to any one of claims 1 to 5, wherein the adjustable apparatus is a switch, a variable capacitor, or a variable inductor.

7. A terminal, comprising the terminal antenna according to any one of claims 1 to 6.

## Patentansprüche

1. Endgerätantenne, umfassend eine Hauptplatine (2), einen auf der Hauptplatine (2) angeordneten Speisepunkt (3), ein Metallgehäuse (1), eine einstellbare Einrichtung und mindestens zwei einstellbare Massepunkte, umfassend einen ersten einstellbaren Massepunkt (5) und einen zweiten einstellbaren Massepunkt (6), wobei die Hauptplatine (2) an einer Innenseite des Metallgehäuses (1) befindlich ist, wobei das Metallgehäuse (1) elektrisch mit der Hauptplatine (2) verbunden ist, und wobei ein Schlitz (4) im Metallgehäuse (1) angeordnet ist;
der Speisepunkt (3) und die mindestens zwei einstellbaren Massepunkte jeweils an einem Teil der Hauptplatine (2) angeordnet sind, die zum Schlitz (4) zeigt, wobei der Speisepunkt (3) zwischen dem ersten einstellbaren Massepunkt (5) und dem zweiten einstellbaren Massepunkt (6) befindlich ist; und
der erste einstellbare Massepunkt (5) und der zweite einstellbare Massepunkt (6) unter Verwendung der einstellbaren Einrichtung jeweils mit einer Masse der Hauptplatine (2) elektrisch verbunden sind, und
wobei der Speisepunkt (3) elektrisch mit einer Speiseschaltung auf der Hauptplatine (2) verbunden ist, wobei die Speiseschaltung ausgelegt ist zum Verarbeiten eines durch einen Sender eines Endgeräts, an dem sich die Endgerätantenne befindet, erzeugten Übertragungssignals und Bereitstellen des verarbeiteten Übertragungssignals für den Speisepunkt (3); und
die einstellbare Einrichtung ausgelegt ist zum Steuern, ob jeder einstellbare Massepunkt geerdet ist, sodass Signale mit einer gleichen Frequenz von einem ersten Ende (40) des Schlitzes (4) und einem zweiten Ende (41) des Schlitzes (4) abgestrahlt werden können.

2. Endgerätantenne nach Anspruch 1, wobei die mindestens zwei einstellbaren Massepunkte ferner einen dritten einstellbaren Massepunkt (7) umfassen, wobei der dritte einstellbare Massepunkt unter Verwendung der einstellbaren Einrichtung elektrisch mit der Masse der Hauptplatine (2) verbunden ist, wobei der erste einstellbare Massepunkt (5) am ersten Ende (40) des Schlitzes (4) befindlich ist und der zweite einstellbare Massepunkt (6) und ein dritter einstellbarer Massepunkt am zweiten Ende (41) des Schlitzes (4) befindlich sind; und
wobei der zweite einstellbare Massepunkt (6) zwischen dem ersten einstellbaren Massepunkt (5) und dem dritten einstellbaren Massepunkt (7) befindlich ist.

3. Endgerätantenne nach Anspruch 2, wobei der erste einstellbare Massepunkt (5) unter Verwendung einer ersten Umschaltschaltung elektrisch mit der Masse der Hauptplatine (2) verbunden ist;
wobei der zweite einstellbare Massepunkt (6) unter Verwendung einer zweiten Umschaltschaltung elektrisch mit der Masse der Hauptplatine (2) verbunden ist; und wobei der dritte einstellbare Massepunkt (7) unter Verwendung einer dritten Umschaltschaltung elektrisch mit der Masse der Hauptplatine (2) verbunden ist; wobei die einstellbare Einrichtung die erste Umschaltschaltung, die zweite Umschaltschaltung und die dritte Umschaltschaltung umfasst.

4. Endgerätantenne nach Anspruch 3, wobei die erste Umschaltschaltung, die zweite Umschaltschaltung und die dritte Umschaltschaltung eine einstellbare Kondensatorschaltung, eine einstellbare Induktorschaltung oder eine Filterschaltung sind.

5. Endgerätantenne nach Anspruch 2, wobei der Schlitz (4) ein U-förmiger Schlitz ist, der im Metallgehäuse (1) angeordnet ist, und wobei sich zwei Enden des U-förmigen Schlitzes zu zwei Seiten des Metallgehäuses (1) erstrecken; oder
wobei der Schlitz (4) ein linearer Schlitz ist, der im Metallgehäuse (1) angeordnet ist, und wobei sich zwei Enden des linearen Schlitzes zu zwei Seiten des Metallgehäuses (1) erstrecken.

6. Endgerätantenne nach einem der Ansprüche 1 bis 5, wobei die einstellbare Einrichtung ein Schalter, ein variabler Kondensator oder ein variabler Induktor ist.

7. Endgerät, umfassend die Endgerätantenne nach einem Ansprüche 1 bis 6.

## Revendications

1. Antenne de terminal, comportant une carte principale (2), un point (3) d'alimentation disposé sur la carte principale (2), un boîtier métallique (1), un appareil réglable, et au moins deux points de masse réglables comportant un premier point (5) de masse réglable et un deuxième point (6) de masse réglable,
la carte principale (2) étant située sur un côté intérieur du boîtier métallique (1), le boîtier métallique (1) étant relié électriquement à la carte principale (2), et une rainure (4) étant disposée dans le boîtier métallique (1) ;
le point (3) d'alimentation et les au moins deux points de masse réglables étant chacun disposés sur une partie de la carte principale (2) faisant face à la rainure (4), le point (3) d'alimentation étant situé entre le premier point (5) de masse réglable et le deuxième point (6) de masse réglable ; et
le premier point (5) de masse réglable, et le deuxième point (6) de masse réglable étant chacun reliés électriquement à une masse de la carte principale (2) en utilisant l'appareil réglable, et
le point (3) d'alimentation étant relié électriquement à un circuit d'alimentation sur la carte principale (2), le circuit d'alimentation étant configuré pour traiter un signal d'émission généré par un émetteur d'un terminal sur lequel est située l'antenne de terminal, et fournir le signal d'émission traité au point (3) d'alimentation ; et l'appareil réglable étant configuré pour commander si chaque point de masse réglable est mis à la masse de telle sorte que des signaux d'une même fréquence puissent être rayonnés à partir d'une première extrémité (40) de la rainure (4) et d'une deuxième extrémité (41) de la rainure (4).

2. Antenne de terminal selon la revendication 1, les au moins deux points de masse réglables comportant en outre un troisième point (7) de masse réglable, le troisième point de masse réglable étant relié électriquement à la masse de la carte principale (2) en utilisant l'appareil réglable, le premier point (5) de masse réglable étant situé à la première extrémité (40) de la rainure (4), et le deuxième point (6) de masse réglable et un troisième point de masse réglable étant situés à la deuxième extrémité (41) de la rainure (4) ; et
le deuxième point (6) de masse réglable étant situé entre le premier point (5) de masse réglable et le troisième point (7) de masse réglable.

3. Antenne de terminal selon la revendication 2, le premier point (5) de masse réglable étant relié électriquement à la masse de la carte principale (2) en utilisant un premier circuit de commutateur ;
le deuxième point (6) de masse réglable étant relié électriquement à la masse de la carte principale (2) en utilisant un deuxième circuit de commutateur ; et
le troisième point (7) de masse réglable étant relié électriquement à la masse de la carte principale (2) en utilisant un troisième circuit de commutateur ;
l'appareil réglable comprenant le premier circuit de commutateur, le deuxième circuit de commutateur et le troisième circuit de commutateur.

4. Antenne de terminal selon la revendication 3, le premier circuit de commutateur, le deuxième circuit de commutateur, et le troisième circuit de commutateur étant chacun un circuit de condensateur réglable, un circuit d'inductance réglable, ou un circuit de filtre.

5. Antenne de terminal selon la revendication 2, la rainure (4) étant une rainure en U disposée dans le boîtier métallique (1), et deux extrémités de la rainure en U s'étendant jusqu'à deux côtés du boîtier métallique (1) ; ou
la rainure (4) étant une rainure linéaire disposée dans le boîtier métallique (1), et deux extrémités de la rainure linéaire s'étendant jusqu'à deux côtés du boîtier métallique (1).

6. Antenne de terminal selon l'une quelconque des revendications 1 à 5, l'appareil réglable étant un commutateur, un condensateur variable, ou une inductance variable.

7. Terminal, comportant l'antenne de terminal selon l'une quelconque des revendications 1 à 6.
